# EUROPEAN PATENT APPLICATION

(11) **EP 0 533 255 A1**
(43) Date of publication of application: **24.03.1993**
(21) Application number: 92202778.4
(22) Date of filing: 11.09.1992
(51) Int. Cl.: H01J 29/86, C03C 17/00, G02B 1/10

(54) **Method of manufacturing a coating**

(30) Priority: 19.09.1991 EP 91202416; 25.11.1991 EP 91203075
(71) Applicant: Philips Electronics N.V., 5621 BA Eindhoven (NL)
(72) Inventor: Heymbeeck, Jürgen Paul Albert, NL-5656 AA Eindhoven (NL); De Boer, Johannes, NL-5656 AA Eindhoven (NL)
(74) Representative: Pennings, Johannes

(57) **Abstract**

A coating 2 of silicon dioxide, if necessary including dopants and additives, is obtained by providing a solution of an alkoxysilane compound in water on a substrate 1, followed by a treatment at an increased temperature to form the layer of silicon dioxide.

## Description

The invention relates to a method of manufacturing a coating on a substrate by hydrolysis of an alkoxysilane compound, thereby forming a layer of silicon dioxide.

Silicon dioxide layers are used, for example, as a protective layer or, for example in combination with other layers, as an antireflective or antiglare layer. The layer may, for example, be doped with suitable materials to form an antistatic layer or a light-absorbing layer. The layer may, for example, be applied to display screens of display devices, envelopes of light sources and optical elements.

In United States Patent Specification US 4945282, a description is given of a method of applying a silicon dioxide layer to a display screen, using an alkoxysilane compound dissolved in alcohol, which alkoxysilane compound is converted to silicon dioxide by increasing the temperature. To obtain an antistatic effect the silicon dioxide may comprise various additives such as, according to said United States Patent Specification, conductive particles.

The use of an alkoxysilane compound which is dissolved in alcohol has a number of disadvantages. The solution is hygroscopic and reactive, and silicon dioxide is continuously being formed in the solution. Due to this, the solution has limited keeping qualities and the results obtained are insufficiently reproducible. The use of an organic solvent may contaminate the environment and, as it is inflammable, requires a number of safety precautions to be taken.

It is an object of the invention to provide, *inter alia*, a simple and reproducible method of manufacturing silicon dioxide coatings. In this connection, the invention further aims at providing a safe method in which the necessity of additional safety precautions is limited to a minimum. A particular object of the invention is to provide a method of manufacturing mechanically strong, scratch-resistant silicon dioxide layers.

These objects are achieved by a method as described in the opening paragraph, which method is characterized according to the invention in that the coating is manufactured by applying a solution of the alkoxysilane compound in water, followed by a treatment at an increased temperature to form the layer of silicon dioxide. The degree of acidity pH of the solution is preferably below 4.

A treatment at an increased temperature can take place, for example, at a temperature between 150°C and 170°C, but, surprisingly, the method according to the invention already yields usable results at temperatures of 50°C and higher.

An alkoxysilane compound which can suitably be used in the method according to the invention is tetraethyl orthosilicate. Alternatively, other alkoxysilane compounds of the type Si(OR)₄, which are known *per se*, can be used, where R is an alkyl group having, preferably, 1 to 5 carbon atoms.

If desired, the solution of the alkoxysilane compound in water and, hence, the silicon dioxide layer manufactured, can be supplemented with one or more materials to change the properties of the layer. To obtain electric conduction and thus antistatic properties, hygroscopic compounds or conductive metal oxides such as tin oxide and indium oxide may be used in a manner which is known *per se*. The light absorption can be increased by using dyes which permit both a colour filter and a neutral-density (grey) filter to be obtained. The addition of a surface-active compound to the solution, for example in quantities of 0.001 to 5% by weight, may have a positive effect on the formation of a homogeneous, smooth layer.

The alkoxysilane compound is substantially insoluble in water, but by mixing said alkoxysilane compound with water a small part is dissolved and hydrolysed, thereby forming alcohol. The alcohol formed helps to dissolve the remainder of the alkoxysilane compound. By virtue of an excess of water a sufficiently stable system is formed after a short time, which is in contrast to the known solutions of alkoxysilane compounds in alcohol, in which hydrolysis and polymerization take place at a very low rate. The solution according to the invention can easily be prepared *in situ* and used directly for the manufacture of coatings on substrates, for example in the manufacture of display screens for cathode ray tubes. The results obtained are highly reproducible.

In European Patent Applications EP 0292179 and EP 0402610, a description is given of the hydrolysis of alkoxysilane compounds in water, in which process the presence of alcohol is undesirable or optional. According to said known methods, a silicon dioxide powder is manufactured which must be sintered at a high temperature to obtain a form-retaining and mechanically strong product. However, there are no indications that a solution of an alkoxysilance compound in water can be used to manufacture a coating. The finding that such a coating is very resistant to scratches is surprising in view of the fact that the products obtained by the known methods are mechanically weak if they are not subjected to a sintering operation.

The invention will be explained in greater detail by means of exemplary embodiments and with reference to an accompanying drawing, in which the sole
Figure is a diagrammatic cross-sectional view of a substrate 1 having a coating 2 according to the invention.

### Exemplary embodiment 1.

A hydrolysed alkoxysilane compound was prepared by mixing equal quantities by weight of tetraethyl orthosilicate and a 0.15 N solution of hydrochloric acid in water and stirring this mixture intensively for 5 minutes. Ethanol was formed in said hydrolysis, so that the alkoxysilane compound could dissolve. Subsequently, the solution was diluted with water to a tetraethyl orthosilicate content of 20% by weight. The quantity of tetraethyl orthosilicate can be adapted to the desired viscosity of the solution and to the desired method of applying the solution to the surface. According to the invention, suitable quantities of tetraethyl orthosilicate lie in the range between 2 and 40% by weight. Preferably, the quantity of acid is preferably less than 1% by weight, yet, sufficient to obtain a degree of acidity pH below 4.

The solution was sprayed on to a cleaned screen of a cathode ray tube, after which it was dried and cured at a temperature of 160°C for 30 minutes. The coating obtained is resistant to scratches and has antiglare properties by virtue of the presence of a surface texture.

The scratch resistance of the coating was tested by means of a conical diamond which was moved over the surface at a pressure of 50 g and which did not form any scratches which were visible to the naked eye.

The hardness of the coating was tested by means of a pencil test in which pencils having different hardnesses were moved over the surface of the layer at a pressure of 7.5 N, at an angle of 45° and with a velocity of 0.05 m/s. According to this test, the inventive coating had a degree of hardness of 8H to 9H. For comparison, the hardness of a prior-art layer manufactured from a solution of tetraethyl orthosilicate in ethanol was measured, which coating had a degree of hardness of 3H to 4H. Consequently, the coating according to the invention has a higher degree of hardness.

### Exemplary embodiment 2.

A coating was manufactured as described in exemplary embodiment 1, except that curing was carried out at a temperature of 50°C. The degree of hardness of the coating obtained was 3H to 4H and, hence, equal to the degree of hardness of a prior-art coating which was obtained by applying a solution of tetraethyl orthosilicate in ethanol, followed by drying and curing at 160°C. According to the invention, the same result can be attained at a much lower temperature. The other properties were equal to those stated in exemplary embodiment 1.

### Exemplary embodiment 3.

A coating was manufactured as described in exemplary embodiment 1, the content of the alkoxysilane compound being 2% by weight and 0.2% by weight of the dye Rhodamine B (available from Merck) being added to the solution. The coating was applied to the surface of the display screen of a cathode ray tube by means of spinning and was cured as described in exemplary embodiment 1. The coating thus obtained can be used to influence the light transmission of the display screen. Dyes which can suitably be used for this purpose in the method according to the invention are, in particular, organic, water-soluble dyes which are used, preferably, in quantities of 0.05 to 2% by weight.

### Exemplary embodiment 4.

A coating was manufactured as described in exemplary embodiment 3, except that the dye was replaced by polypyrrole latex particles which were added to the solution in a quantity of 1% by weight. Such a coating reduces the light transmission of the display screen (neutral-density or grey filter) and also has an antistatic effect due to the electric conduction of the polypyrrole particles. Preferably, the quantities of polypyrrole latex particles in the solution range between 0.5 and 5% by weight. Other additives which can suitably be used to attain an antistatic effect are metal sols, for example of tin, antimony, palladium, platinum, gold or silver, comprising a quantity of metal particles in the solution in the range between 0.05 and 5% by weight.

By means of the invention, scratch-resistant and hard coatings were manufactured, without using organic solvents, and provided on a display screen of a cathode ray tube in a simple manner.

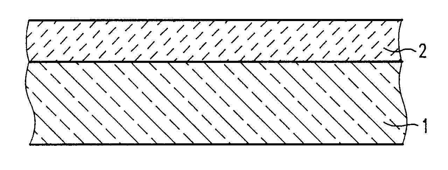

## Claims

1. A method of manufacturing a coating on a substrate by hydrolysis of an alkoxysilane compound, thereby forming a layer of silicon dioxide, characterized in that the coating is manufactured by applying a solution of the alkoxysilane compound in water, followed by a treatment at an increased temperature to form the layer of silicon dioxide.

2. A method as claimed in Claim 1, characterized in that the degree of acidity pH of the solution is below 4.
